# EUROPEAN PATENT SPECIFICATION

(11) **EP 2 612 580 B1**
(45) Date of publication and mention of the grant of the patent: **05.04.2017**
(21) Application number: 12380055.9
(22) Date of filing: 21.12.2012
(51) Int. Cl.: A47J 43/25, F25C 5/12

(54) **Kitchen utensil for cutting a food product**
Küchenutensil zum Schneiden von Lebensmittelprodukten
Ustensile de cuisine pour découper un produit alimentaire

(30) Priority: 04.01.2012 ES 201230009
(43) Date of publication of application: 10.07.2013
(73) Proprietor: Compania Espanola de Electromenaje, SL, 25790 Oliana (ES)
(72) Inventor: Trench Roca, Lluis, 08650 Sallent (Barcelona) (ES); Torregassa Prat, Josep, 25790 Oliana (Lleida) (ES)
(74) Representative: Juncosa Miro, Jaime

(56) References cited:
- EP-A1- 0 174 407
- FR-A1- 2 942 985
- US-A1- 2002 092 942
- US-A1- 2006 043 222
- US-B1- 6 302 014

## Description

### Field of the Art

The present invention generally relates to a kitchen utensil for cutting a food product, and more particularly to a kitchen utensil comprising at least one cutting element in a stationary position on a receptacle and a manually handled unit having a rotary pressure member driven for rotating a solid food product and applying pressure on it against said cutting element.

The food products suitable for being cut by means of the kitchen utensil of the present invention primarily include vegetables, such as tubercles, roots, bulbs, fruits, etc., although it is also possible to cut meat or fish, especially if they are hard from being frozen or cured.

### Background of the Invention

Document EP 0174407 discloses an apparatus for cutting shavings from an object such as an ice cube, comprising a reservoir for containing shavings cut from said object, a support plate with an opening associated with a cutter blade arranged above said reservoir, a rotating cylinder rotatably supported on the support plate, where said rotating cylinder houses the object to cut and has at least one projecting portion engaging with the object to cut such that it is rotated to cut by said cutter blade, and rotation and pressure means comprising a rotation and pressure transmission plate which rotates said rotating cylinder about its own axis and presses the object to cut against the support plate while it rotates with the rotating cylinder.

A drawback of the apparatus described in the mentioned document EP 0174407 is that said rotation and pressure means are installed in an outer casing which is fixed to the support plate by a bayonet device for assuring the correct alignment of said rotation and pressure transmission plate which moves in a guided manner in the axial direction of the rotating cylinder, which prevents said outer casing from being able to be manually gripped and supported for positioning the outer casing in different positions in relation to the support plate while using the apparatus.

Another drawback of the apparatus described in the mentioned document EP 0174407 is that the rotation and pressure transmission plate of the rotation and pressure means is unable to secure and transmit torque directly to the object to cut, so it needs an intermediate part, such as the mentioned rotating cylinder, which secures and transmits torque to the object to cut while the drive means are coupled and transmit torque to said intermediate part. This increases the number of separate parts making up the apparatus, and accordingly increases the complexity thereof and complicates handling, cleaning and maintenance.

Document US 2006/043222 A1 discloses a kitchen utensil for cutting a food product comprising a support plate having a passage opening, a cutting element fixed to said support plate adjacent to said passage opening, a receptacle located below the support plate for collecting pieces of said food product cut by the cutting element and passed through the passage opening, and a movable part having an outer casing in which a rotary pressure member is installed, said rotary member being configured to be coupled to said food product and to transmit torque thereto. An electric motor operatively connected for driving the rotary pressure member is housed within said outer casing, and the outer casing is configured as a handle for being gripped with a user's hand. However, the outer casing of the movable part of this kitchen utensil has not coupling means for operatively and releasably coupling to corresponding coupling means of a separate handle in which a drive electric motor is housed. The document US 6,302,014 B1 discloses a further kitchen utensil.

### Disclosure of the Invention

The present invention contributes to mitigating the preceding and other drawbacks by providing a kitchen utensil for cutting a food product according to claim 1.

With this construction, the drive means directly drive the rotary pressure member which is coupled to the food product and it applies rotary movement and pressure thereto without the need for any intermediate part, and the user furthermore has the freedom to manually handle the outer casing to find the best position of it and of the rotary pressure member in relation to the support plate and the cutting element for optimizing the cutting operation while using the kitchen utensil.

With this construction, the drive means directly drive the rotary pressure member which is coupled to the food product and it applies rotary movement and pressure thereto without the need for any intermediate part, and the user furthermore has the freedom to manually handle the outer casing to find the best position of it and of the rotary pressure member in relation to the support plate and the cutting element for optimizing the cutting operation while using the kitchen utensil.

In one embodiment, the mentioned grip and support means comprise a handle connected to the outer casing and configured for being gripped with the user's hand, and said drive means preferably comprise an electric motor housed in said handle and operatively connected for driving the rotary pressure member.

In a preferred embodiment, the outer casing and the handle are separate bodies and comprise coupling means whereby the outer casing and the handle can be operatively coupled to one another in a releasable manner to form the movable part of the kitchen utensil of the present invention. In such case, the outer casing can have a transmission shaft rotatably installed therein operatively connected for transmitting torque to the rotary pressure member, said transmission shaft being configured for being coaxially coupled in a reversible manner to a drive shaft installed in the handle and driven by said electric motor when the outer casing is operatively coupled to the handle.

For example, the coupling means of the outer casing of the kitchen utensil of the present invention can be suitable for being coupled to a motorization and control unit of an existing hand-held blender with a detachable head, which in this case performs functions of a handle. In other words, the kitchen utensil of the present invention can be an accessory implement for an existing hand-held blender with a detachable head. Nevertheless, in another alternative embodiment the outer casing and the handle are permanently attached forming a unit constituting the movable part of the kitchen utensil of the present invention.

In one embodiment, the transmission shaft of the kitchen utensil is connected to the rotary pressure member by a gear reducer mechanism installed in the outer casing for reducing a relatively high speed of the transmission shaft to a relatively low speed of the rotary pressure member suitable for a food product cutting operation. For example, the gear reducer mechanism can be a planetary gear reducer providing a high reduction ratio with a highly compact volume.

In one embodiment, the support plate defines a cone-shaped wear surface having a central region further away from the rotary pressure member than a peripheral region when in use, and the passage opening is elongated and extends substantially from said central region of the cone-shaped wear surface to said peripheral region thereof, and the cutting element is elongated and extends substantially along the entire passage opening, although the passage opening and the cutting element can alternatively have other configurations or the support plate can have multiple passage openings and multiple cutting elements.

The conical shaped of the wear surface helps centering the food product with respect to the support plate when said food product is rotated and pressed against the support plate and the cutting element, which facilitates manually handling the movable part of the kitchen utensil and provides greater cutting regularity.

The rotary pressure member preferably comprises a pressure surface from which there project drive elements configured for being coupled to the food product and transmitting torque to the food product. Furthermore, the rotary pressure member preferably comprises a central spike configured for penetrating the food product, which helps the user to center the food product in relation to the rotary pressure member. According to the invention, the mentioned receptacle has a top opening, a bottom and a surrounding wall in which supporting projections detachably supporting the support plate close to said top opening and above said bottom are formed, such that cut pieces of the food product, which pass through the passage opening, fall into the receptacle and accumulate on the bottom. Preferably, the surrounding wall of the receptacle further has retaining projections which are coupled with notches formed in the support plate for preventing the rotation of the support plate with respect to the receptacle.

### Brief Description of the Drawings

The foregoing and other features and advantages will become more evident from the following description of an embodiment in reference to the attached drawings, in which:
Figure 1 is a perspective view of a kitchen utensil according to a first embodiment of the present invention, with a movable part separated from a fixed part;
Figure 2 is a perspective view of a support plate of the fixed part of the kitchen utensil of Figure 1;
Figure 3 is a perspective view of a receptacle of the fixed part of the kitchen utensil of Figure 1;
Figure 4 is a cross-section view taken along a central vertical plane of the kitchen utensil of Figure 1;
Figure 5 is a cross-section view taken along a central vertical plane of the kitchen utensil of Figure 1 coupled to a motorization and control unit of a hand-held blender with a detachable head when in use; and
Figure 6 is a cross-section view taken along a central vertical plane of a kitchen utensil according to a second embodiment of the present invention.

### Detailed Description of an Exemplary Embodiment

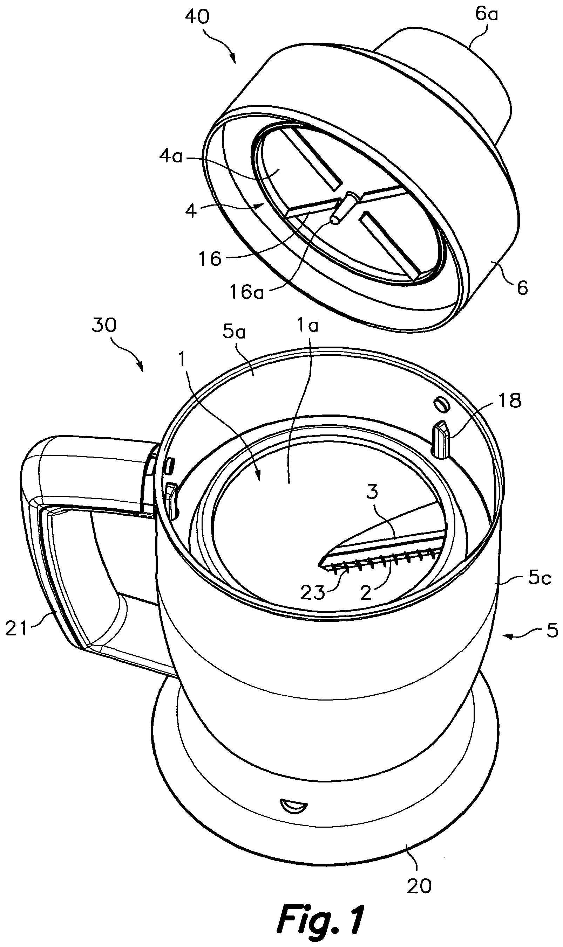

First in reference to Figures 1 to 3, there is shown a kitchen utensil for cutting a food product according to a first embodiment of the present invention which comprises a receptacle 5 having a top opening 5a, a bottom 5b and a surrounding wall 5c. The receptacle 5 further includes a base 20 and a grip 21. Supporting projections 17 supporting a support plate 1 are formed on an inner surface of the surrounding wall 5c, such that said support plate 1 is located close to the top opening 5a and above the bottom 5b. The mentioned support plate 1 has a perimetric edge which fits with the inner surface of the surrounding wall 5c of the receptacle 5 and which rests on said supporting projections 17.

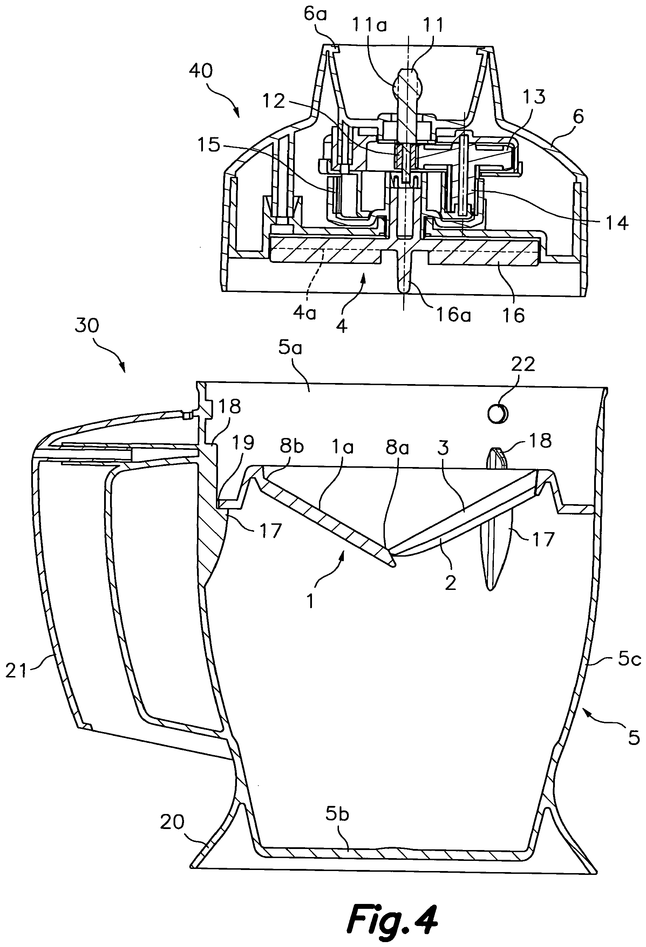

Notches 19 which are coupled to retaining projections 18 formed on the inner surface of the surrounding wall 5c of the receptacle 5 are formed on this perimetric edge of the support plate 1, such that said retaining projections 18 cooperate with said notches 19 for preventing the rotation of the support plate 1 with respect to the receptacle 5 when the support plate is supported on supporting projections 17 in the use position (Figures 1 and 4). Lugs 22 aligned with retaining projections 18 which serve to help find the correct angular position of the support plate 1 when the latter is placed in the receptacle 5 are arranged close to the top opening 5a of the receptacle 5. The support plate 1 is easily extractable.

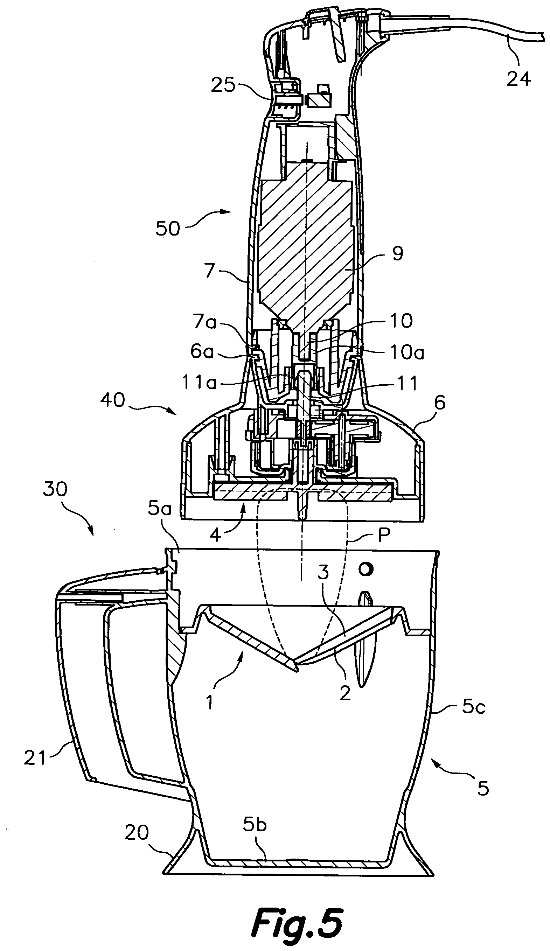

The support plate 1 has a passage opening 2, and a cutting element 3 is fixed to said support plate 1 adjacent to said passage opening 2. The cutting element 3 is suitable for cutting a food product P (represented by means of dotted lines in Figure 5), such that cut pieces of the food product P pass through the opening 2 and fall into the receptacle 5, where they are collected.

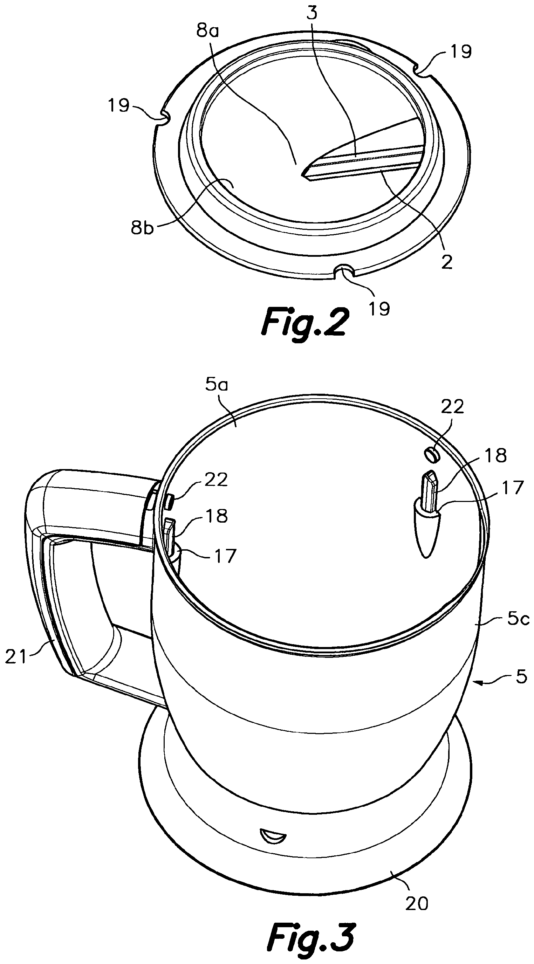

As is best shown in Figure 3, the support plate 1 defines a cone-shaped wear surface 1a having a central region 8a and a peripheral region 8b, and the central region 8a is further away from the top opening 5a of the receptacle 5 than the peripheral region 8b when in use. The passage opening 2 is elongated and extends substantially from the central region 8a of the cone-shaped wear surface 1a to the peripheral region 8b, and the cutting element 3 is also elongated and extends substantially along the entire passage opening 2. With this configuration, the cutting element 3 produces thinly cut slices of the food product P.

Nevertheless, the number and the shape of passage openings and cutting elements included in the support plate 1 allows for multiple variants, which are also within the scope of the present invention. For example, in the embodiment shown in Figure 1, the support plate 1 has a plurality of small cutting elements 23 perpendicular to the main cutting element 3 fixed in positions adjacent to the passage opening 2, whereby thinly cut strips of the food product P would be obtained.

The support plate 1 and the receptacle 5 form a fixed part 30 when in use, and the kitchen utensil includes a movable part 40 in which there are arranged pressure and rotation application means which serve for applying torque to the solid food product P and for pressing it while it rotates against the support plate 1 and against said cutting element 3. These said pressure and rotation application means comprise an outer casing 6 in which there is installed a rotary pressure member 4 comprising a pressure surface 4a from which there project drive elements 16 configured for being coupled to the food product P and transmitting rotary movement and torque thereto, and a central spike 16a configured for penetrating the food product P. The outer casing 6 has a bottom opening and the rotary pressure member 4 is installed close to said bottom opening.

A transmission shaft 11 is rotatably installed in the outer casing 6 and operatively connected for transmitting torque to the rotary pressure member 4 by means of a planetary gear reducer mechanism 12, 13, 14, 15 also housed in the outer casing 6. The planetary gear reducer mechanism comprises an input pinion 12 fixed to the transmission shaft 11 and meshing with a number of planetary gear wheels 13 distributed around the transmission shaft 11 and assembled on respective shafts parallel to the transmission shaft 11. Each one of said planetary gear wheels 13 is attached coaxially to a respective intermediate pinion 14 meshing with an inner gear ring 15 coaxially fixed to the rotary pressure member 4, which in turn is coaxial to the transmission shaft 11.

The outer casing 6 comprises coupling means 6a whereby the outer casing 6 can be coupled to corresponding coupling means 7a of a handle 7 in which an electric motor 9 and a drive shaft 10 driven by said electric motor 9 are installed. The transmission shaft 11 of the movable part 40 of the kitchen utensil has lobes 11a configured for being coaxially coupled in a reversible manner to a coupling element 10a fixed to the drive shaft 10 installed in the handle 7 when the outer casing 6 is operatively coupled to the handle 7. Therefore, the electric motor 9 installed in the handle 7 is part of drive means for rotating said rotary pressure member 4.

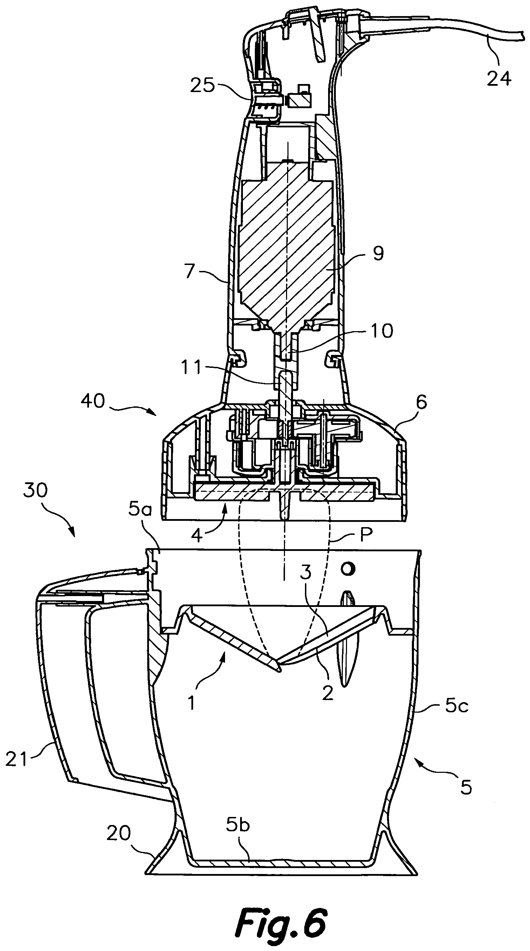

The handle 7 is configured for being gripped with the user's hand. Therefore, when the handle 7 is coupled to the outer casing 6, the handle 7 forms grip and support means allowing a user to manually support the outer casing 6. In use, when the rotary pressure member 4 is coupled to the food product P and the food product P is pressed against the support plate 1 (Figures 5 and 6) the receptacle 5 does not interfere with the outer casing 6, so that the user holding the handle 7 can position the outer casing 6 and the rotary pressure member 4 installed therein in several positions in relation to the support plate 1 while using the kitchen utensil.

The coupling means 6a whereby the outer casing 6 is coupled to the handle 7 are easily releasable, such that the outer casing 6 and the handle 7 are separate bodies. In the embodiment shown in Figures 1 to 5, the handle 7 can be formed by a motorization and control unit 50 of a known hand-held blender with a detachable head, including an electric supply cable 24 and an on/off button 25 connected with a control circuit.

Figure 6 shows a second embodiment of the kitchen utensil of the present invention, which is similar in all aspects to the first embodiment described in relation to Figures 1 to 5 except that in this embodiment the handle 7 is permanently attached to the outer casing 6 and the drive shaft 10 driven by the electric motor 9 housed in the handle 7 is permanently connected to the transmission shaft 11, such that the outer casing 6 and the handle 7 form the movable part 40 of the kitchen utensil as a unit which can be manually handled. In this second embodiment, the electric motor 9 is powered by an electric supply cable 24 and the handle 7 includes an on/off button 25 connected with a control circuit.

A person skilled in the art will easily devise modifications and variations from the embodiments shown and described without departing from the scope of the present invention as described in the attached claims.

## Claims

1. A kitchen utensil for cutting a food product, comprising:
- a support plate (1) with at least one passage opening (2);
- at least one cutting element (3) fixed to said support plate (1) adjacent to said passage opening (2);
- a receptacle (5) located below the support plate (1) for collecting pieces of said food product (P) cut by the cutting element (3) and passed through the passage opening (2); and
- an outer casing (6) in which a rotary pressure member (4) is installed, said rotary pressure member (4) being configured for being coupled to a solid food product (P) and pressing it while it rotates against the support plate (1) and against said cutting element (3),
**characterized in that**:
the receptacle (5) has a top opening (5a), a bottom (5b) and a surrounding wall (5c) in which supporting projections (17) are formed, said supporting projections (17) detachably supporting the support plate (1) above said bottom (5b) and close to said top opening (5a) defining an open cavity with the support plate (1) as a bottom;
the support plate (1) has a perimetrical edge which fits with the inner surface of the surrounding wall (5c) of the receptacle (5); and
said outer casing (6) being associated to grip and support means providing a movable part (40) allowing a user to manually support said outer casing (6) and position the outer casing (6) and the rotary pressure member (4) in several positions in relation to the support plate (1) and the cutting element while performing a cutting operation using the kitchen utensil.

2. The kitchen utensil according to claim 1, wherein said grip and support means comprise a handle (7) connected to the outer casing (6) and configured for being gripped with the user's hand.

3. The kitchen utensil according to claim 2, wherein said drive means comprise an electric motor (9) housed in said handle (7).

4. The kitchen utensil according to claim 3, wherein the outer casing (6) and the handle (7) are separate bodies and comprise coupling means whereby the outer casing (6) and the handle (7) can be operatively coupled to one another in a releasable manner.

5. The kitchen utensil according to claim 4, wherein the outer casing (6) has rotatably installed therein a transmission shaft (11) operatively connected for transmitting torque to the rotary pressure member (4), and said transmission shaft (11) is configured for being coaxially coupled in a reversible manner to a drive shaft (10) installed in the handle (7) and driven by said electric motor (9) when the outer casing (6) is operatively coupled to the handle (7).

6. The kitchen utensil according to claim 3, wherein the outer casing (6) and the handle (7) are permanently attached forming a unit, where the outer casing (6) has rotatably installed therein a transmission shaft (11) operatively connected for transmitting torque to the rotary pressure member (4), and said electric motor (9) is operatively connected for rotating said transmission shaft (11).

7. The kitchen utensil according to claim 5 or 6, wherein the transmission shaft (11) is connected to the rotary pressure member (4) by a gear reducer mechanism (12, 13, 14, 15) installed in the outer casing (6).

8. The kitchen utensil according to claim 7, wherein said gear reducer mechanism (12, 13, 14, 15) is a planetary gear reducer.

9. The kitchen utensil according to any one of the preceding claims, wherein the support plate (1) defines a cone-shaped wear surface (1a) having a central region (8a) further away from a top opening (5a) of the receptacle (5) than a peripheral region (8b) when in use.

10. The kitchen utensil according to claim 9, wherein the passage opening (2) is elongated and extends substantially from said central region (8a) of said cone-shaped wear surface (1a) to said peripheral region (8b) of the cone-shaped wear surface (1a), and the cutting element (3) is elongated and extends substantially along the entire passage opening (2).

11. The kitchen utensil according to any one of the preceding claims, wherein the rotary pressure member (4) comprises a pressure surface (4a) from which there project drive elements (16) configured for being coupled to the food product (P) and transmitting torque to the food product (P).

12. The kitchen utensil according to claim 11, wherein the rotary pressure member (4) comprises a central spike (16a) configured for penetrating the food product (P).

13. The kitchen utensil according to claim 1, wherein said surrounding wall (5c) of the receptacle (5) has retaining projections (18) which are coupled with notches (19) formed in the support plate (1) for preventing the rotation of the support plate (1) with respect to the receptacle (5).

## Patentansprüche

1. Küchenutensil zum Schneiden eines Lebensmittelprodukts, umfassend:
- eine Stützplatte (1) mit mindestens einer Durchgangsöffnung (2);
- mindestens ein Schneidelement (3), welches an der genannten Stützplatte (1) der genannten Durchgangsöffnung (2) benachbart fixiert ist;
- einen Behälter (5), welcher sich unter der Stützplatte (1) befindet, um Stücke des genannten Lebensmittelprodukts (P), welche vom Schneidelement (3) geschnitten wurden und durch die Durchgangsöffnung (2) durchgegangen sind, aufzufangen; und
- ein äußeres Gehäuse (6), in welchem ein drehbares Druckelement (4) installiert ist, wobei das genannte drehbare Druckelement (4) dazu ausgebildet ist, mit einem festen Lebensmittelprodukt (P) gekoppelt zu werden und es während seiner Drehung gegen die Stützplatte (1) und gegen das genannte Schneidelement (3) zu drücken,
**dadurch gekennzeichnet, dass**:
der Behälter (5) eine obere Öffnung (5a), einen Boden (5b) und eine umgebende Wand (5c) aufweist, in welcher Stützvorsprünge (17) gebildet sind, wobei die genannten Stützvorsprünge (17) die Stützplatte (1) über dem genannten Boden (5b) und nah an der genannten oberen Öffnung (5a) abnehmbar stützen, so dass sie eine offene Aussparung mit der Stützplatte (1) als Boden definieren;
die Stützplatte (1) einen Umfangsrand aufweist, welcher mit der Innenfläche der umgebenden Wand (5c) des Behälters (5) zusammenpasst; und
wobei das genannte äußere Gehäuse (6) mit Greif- und Stützmitteln assoziiert ist, welche ein bewegliches Teil (40) bereitstellen, so dass dem Benutzer erlaubt wird, das genannte äußere Gehäuse (6) manuell zu stützen und das äußere Gehäuse (6) und das drehbare Druckelement (4) in mehreren Positionen in Bezug auf die Stützplatte (1) und das Schneidelement zu platzieren, während des Durchführens eines Schneidvorgangs unter Verwendung des Küchenutensils.

2. Küchenutensil nach Anspruch 1, wobei die genannten Greif- und Stützmittel einen Griff (7) umfassen, welcher mit dem äußeren Gehäuse (6) verbunden ist und dazu ausgebildet ist, von der Hand des Benutzers gegriffen zu werden.

3. Küchenutensil nach Anspruch 2, wobei die genannten Antriebsmittel einen elektrischen Motor (9) umfassen, welcher im genannten Griff (7) aufgenommen ist.

4. Küchenutensil nach Anspruch 3, wobei das äußere Gehäuse (6) und der Griff (7) separate Körper sind und Kopplungsmittel umfassen, mit welchen das äußere Gehäuse (6) und der Griff (7) betriebsfähig miteinander lösbar gekoppelt werden können.

5. Küchenutensil nach Anspruch 4, wobei im Inneren des äußeren Gehäuses (6) eine Übertragungswelle (11) installiert ist, welche betriebsfähig verbunden ist, um ein Drehmoment auf das drehbare Druckelement (4) zu übertragen, und wobei die genannte Übertragungswelle (11) dazu ausgebildet ist, reversibel mit einer Antriebswelle (10), welche im Griff (7) installiert ist und vom genannten elektrischen Motor (9) angetrieben wird, koaxial gekoppelt zu werden, wenn das äußere Gehäuse (6) betriebsfähig mit dem Griff (7) gekoppelt ist.

6. Küchenutensil nach Anspruch 3, wobei das äußere Gehäuse (6) und der Griff (7) permanent verbunden sind unter Bildung einer Einheit, wobei im Inneren des äußeren Gehäuses (6) eine Übertragungswelle (11) drehbar installiert ist, welche betriebsfähig verbunden ist, um ein Drehmoment auf das drehbare Druckelement (4) zu übertragen, und wobei der genannte elektrische Motor (9) betriebsfähig verbunden ist, um die genannte Übertragungswelle (11) zu drehen.

7. Küchenutensil nach Anspruch 5 oder 6, wobei die Übertragungswelle (11) mit dem drehbaren Druckelement (4) mittels eines Getriebeuntersetzungsmechanismus (12, 13, 14, 15) verbunden ist, welcher im äußeren Gehäuse (6) installiert ist.

8. Küchenutensil nach Anspruch 7, wobei der genannte Getriebeuntersetzungsmechanismus (12, 13, 14, 15) eine Planetengetriebe-Reduziereinrichtung ist.

9. Küchenutensil nach einem der vorhergehenden Ansprüche, wobei die Stützplatte (1) eine kegelförmige Verschleißfläche (1a) definiert, welche einen zentralen Bereich (8a) aufweist, welcher im Einsatz weiter von einer oberen Öffnung (5a) des Behälters (5) liegt als ein Umfangsbereich (8b).

10. Küchenutensil nach Anspruch 9, wobei die Durchgangsöffnung (2) länglich ist und sich im Wesentlichen von dem genannten zentralen Bereich (8a) der genannten kegelförmigen Verschleißfläche (1a) bis zum genannten Umfangsbereich (8b) der kegelförmigen Verschleißfläche (1a) erstreckt, und das Schneidelement (3) länglich ist und sich im Wesentlichen entlang der gesamten Durchgangsöffnung (2) erstreckt.

11. Küchenutensil nach einem der vorhergehenden Ansprüche, wobei das drehbare Druckelement (4) eine Druckfläche (4a) umfasst, aus welcher Antriebselemente (16) hervorstehen, welche dazu ausgebildet sind, mit dem Lebensmittelprodukt (P) gekoppelt zu werden und ein Drehmoment auf das Lebensmittelprodukt (P) zu übertragen.

12. Küchenutensil nach Anspruch 11, wobei das drehbare Druckelement (4) eine zentrale Spitze (16a) umfasst, welche dazu ausgebildet ist, in das Lebensmittelprodukt (P) einzudringen.

13. Küchenutensil nach Anspruch 1, wobei die genannte umgebende Wand (5c) des Behälters (5) Rückhaltevorsprünge (18) aufweist, welche mit Kerben (19) gekoppelt sind, welche in der Stützplatte (1) gebildet sind, um die Drehung der Stützplatte (1) in Bezug auf den Behälter (5) zu verhindern.

## Revendications

1. Un ustensile de cuisine pour trancher un produit alimentaire, comportant :
- une plaque de support (1) ayant au moins une ouverture de passage (2) ;
- au moins un élément tranchant (3) fixé sur cette plaque de support (1) adjacente à cette ouverture de passage (2) ;
- un réceptacle (5) situé au-dessous de la plaque de support (1) pour collecter des morceaux de ce produit alimentaire (P) coupé par l'élément tranchant (3) et ayant passés à travers l'ouverture de passage (2) ; et
- un carter extérieur (6) dans lequel un élément de pression rotatif (4) est installé, cet élément de pression rotatif (4) étant configuré pour être couplé à un produit alimentaire solide (P) et le presser pendant qu'il tourne contre la plaque de support (1) y contre cette élément tranchant (3),
**caractérisé en ce que** :
le réceptacle (5) a une ouverture supérieure (5a), un fonds (5b) et une paroi enveloppante (5c) sur laquelle sont formés des projections de support (17), ces projections de support (17) supportant la plaque de support (1) de façon détachable au-dessus de ce fonds (5b) et proche de cette ouverture supérieure (5a) définissant une cavité ouverte ayant la plaque de support (1) comme fonds ;
la plaque de support (1) a un bord périmétrique qui s'adapte à la surface intérieure de la paroi qui l'entoure (5c) du réceptacle (5) ; et
ce carter extérieur (6) étant associé à des moyens de saisie et de support fournissant une pièce mobile (40) permettant qu'un usager supporte manuellement ce carter extérieur (6) et positionne le carter extérieur (6) et l'élément de pression rotatif (4) dans plusieurs positions par rapport à la plaque de support (1) et l'élément tranchant pendant qu'il effectue une opération de tranchage en utilisant l'ustensile de cuisine.

2. L'ustensile de cuisine conformément à la revendication 1, dans lequel ces moyens de saisie et de support comportent une anse (7) reliée au carter extérieur (6) et configurée pour être saisie par la main de l'usager.

3. L'ustensile de cuisine conformément à la revendication (2), dans lequel ces moyens d'entraînement comportent un moteur électrique (9) logé dans cette anse (7).

4. L'ustensile de cuisine conformément à la revendication 3, dans lequel ce carter extérieur et l'anse (7) sont des corps séparés et comportent des moyens de couplage avec lesquels le carter extérieur (6) et l'anse (7) peuvent être couplés fonctionnellement l'un à l'autre d'une façon détachable.

5. L'ustensile de cuisine conformément à la revendication 4, dans lequel le carter extérieur (6) possède un arbre de transmission (11) installé rotatif en son intérieur fonctionnellement relié pour transmettre un couple à l'élément de pression rotatif (4) et cet axe de transmission (11) est configuré pour être coaxialement couplé de façon réversible à un arbre d'entraînement (10) installé dans l'anse (7) et entraîné par ce moteur électrique (9) lorsque le carter extérieur (6) est fonctionnellement couplé à l'anse (7).

6. L'ustensile de cuisine conformément à la revendication 3, dans lequel ce carter extérieur (6) et l'anse (7) sont en permanence attachés en formant une unité, où le carter extérieur (6) possède un arbre de transmission (11) installé rotatif en son intérieur fonctionnellement relié pour transmettre le couple à l'élément de pression rotatif (4) et ce moteur électrique (9) est fonctionnellement relié pour faire tourner cet arbre d'entraînement (11).

7. L'ustensile de cuisine conformément à la revendication 5 ou 6, dans lequel l'arbre de transmission (11) est relié à l'élément de pression rotatif (4) par un mécanisme réducteur à engrenages (12, 13, 14, 15) installé dans le carter extérieur (6).

8. L'ustensile de cuisine conformément à la revendication 7, dans lequel ce mécanisme de transmission intermédiaire (12, 13, 14, 15) est un mécanisme réducteur à engrenages planétaire.

9. L'ustensile de cuisine conformément à une quelconque des revendications précédentes dans lequel la plaque de support (1) définit une surface d'usure en forme de cône (1a) ayant une région centrale (8a) plus éloignée de l'ouverture supérieure (5a) du réceptacle (5) qu'une région périphérique (8) lors qu'il est utilisé.

10. L'ustensile de cuisine conformément à la revendication 9, dans lequel l'ouverture de passage (2) est allongée et s'étend sensiblement de cette région centrale (8a) de cette surface d'usure en forme de cône (1a) jusqu'à cette région périphérique (8b) de la surface d'usure en forme de cône (1a) et l'élément tranchant (3) est allongé et s'étend sensiblement le long de toute l'ouverture de passage (2).

11. L'ustensile de cuisine conformément à une quelconque des revendications précédentes, dans lequel l'élément de pression rotatif (4) comporte une surface de pression (4a) à partir de laquelle des éléments d'entraînement sont projetés (16) configurés pour être couplés au produit alimentaire (P) et transmettant le couple au produit alimentaire (P).

12. L'ustensile de cuisine conformément à la revendication 11, dans lequel l'élément de pression rotatif (4) comporte une pointe centrale (16a) configurée pour pénétrer dans le produit alimentaire (P).

13. L'ustensile de cuisine conformément à la revendication 1, dans lequel cette paroi enveloppante (5c) du réceptacle (5) a des projections de rétention (18) qui sont couplées à des encoches (19) formées sur la plaque de support (1) pour empêcher la rotation de la plaque de support (1) par rapport au réceptacle (5).
